# EUROPEAN PATENT SPECIFICATION

(11) **EP 2 883 606 B1**
(45) Date of publication and mention of the grant of the patent: **29.04.2020**
(21) Application number: 13196685.5
(22) Date of filing: 11.12.2013
(51) Int. Cl.: B01J 13/16, B01J 37/00, B01J 23/50, B01J 31/00, B01J 35/00

(54) **Polymer capsules comprising catalysts**
Polymerkapseln mit Katalysatoren
Capsules polymères comprenant des catalyseurs

(43) Date of publication of application: 17.06.2015
(73) Proprietor: Leibniz-Institut für Polymerforschung Dresden e.V., 01069 Dresden (DE)
(72) Inventor: Horecha, Marta, 01069 Dresden (DE); Horechyy, Andriy, 01069 Dresden (DE); Stamm, Manfred, 01705 Freital-Pesterwitz (DE)
(74) Representative: Hoefer & Partner Patentanwälte mbB

(56) References cited:
- EP-A1- 1 398 073
- WO-A1-97/24177
- US-A- 3 954 666
- US-A- 4 324 683
- Marta Horecha ET AL: "One-Pot Synthesis of Thermoresponsive PNIPAM Hydrogel Microcapsules Designed to Function in Apolar Media", Macromolecules, vol. 42, no. 15, 11 August 2009 (2009-08-11), pages 5811-5817, XP055446458, US ISSN: 0024-9297, DOI: 10.1021/ma9008934
- Zhihai Cao ET AL: "Synthesis of Narrowly Size-Distributed Thermosensitive Poly( N -isopropylacrylamide) Nanocapsules in Inverse Miniemulsion", Macromolecules, vol. 43, no. 15, 10 August 2010 (2010-08-10), pages 6353-6360, XP055446481, US ISSN: 0024-9297, DOI: 10.1021/ma101115t

## Description

### Technical field

The present invention relates to a reactor system comprising capsules and at least one catalyst inside the capsules, a process for preparing such capsules, capsules obtainable by this process, the use of the capsules as carriers for catalysts and their use in the reactor system, and the use of the reactor system for catalysis.

### Background of the Invention

Catalysis with nanoparticles (i.e. nanocatalysis) is usually considered as an intermediate between heterogeneous and homogeneous ones. In the recent past the research interest towards nanocatalytic systems based on metal or metal oxide nanoparticles of different size and shape substantially increased. The high catalytic activity of nanosized particles is caused by their large surface-to-volume ratio and an existence of easily accessible special binding sites on their surface, and, thus, largely depends on their size and shape. However, the very small size of nanoparticles significantly complicates their separation and effective recovery after the reaction.

Another problem of pristine nanoparticles is their low dispersion stability and enhanced tendency to aggregate, which lowers their catalytic efficiency significantly.

To prevent the nanoparticles from aggregation various stabilizing agents, such as charged molecules, low molecular weight ligands, polymers, dendrimers, micelles or microemulsions can be applied, ensuring particles dispersion stability in both polar and non-polar media. Nevertheless, such enhanced stability of nanoparticles in reaction media does not solve the problem or even complicates the procedure of their recovering.

The difficulties with the nanocatalyst recovery can be largely overcome by utilization of supported or confined nanocatalyst. Recently, a number of reports have been focused on catalytic systems, where the nanoparticles are attached to the substrate (i.e. carriers). For instance, various metal oxides were successfully used as supports for immobilisation of different types of nanoparticles and their catalytic efficiency was examined. One of the drawbacks of such systems is that metal oxide particles usually form stable dispersions only in water and in polar media, whereas the methods of preparation of easily recoverable nanocatalysts, which can be used in non-polar environment, still remain challenging tasks.

One of the most promising ways to ensure nanocatalyst dispersion stability and facility of recovery is encapsulation into hollow structures, for example into capsules or vehicles. Utilization of hollow structures as nanocatalyst carriers requires that their intrinsic properties, e.g. dispersion stability, recoverability, chemical resistance etc., will meet the requirements for the systems to be used for catalytic purposes. In this aspect, hollow structures (i.e. capsules) composed of polymers represent a class of catalyst carries with a very large spectrum of properties which, in turn, can be tuned by varying a number of parameters, such as chemical composition, size, wall thickness, cross-linking density, etc. Hollow polymer structures can be prepared by a number of methods: layer-by-layer (LbL) technique, self-assembly, vesicular polymerization or microfluidic fabrication. Etching of a solid core from polymer-coated core-shell particles also represents a way to obtain hollow polymer structures. This step-wise approach typically involves formation of the polymer shell of desired material on the solid core (e.g. SiO₂) via layer-by layer deposition or surface-initiated polymerisation, etc. followed by the removal of the core. An example of the application of a templating approach for the preparation of polymer-confined nanocatalyst was recently reported (G. L. Li et al., Polym. Chem., 2011, 2, 1368).

This method, however, is quite complicated due to the multistep procedure. In addition, it requires dissolution of the hard template after the formation of the polymer layer which might also lead to contamination of the capsules' interior, in particular because of difficulties associated with complete template removal.

An alternative way to provide hollow structures (i.e. capsules) without the use of a solid core is by way of the miniemulsion technique. Generally, a miniemulsion is understood to be an emulsion of small stable droplets (of a non-polar liquid phase) in a continuous (polar) phase which is created by the application of high shear stress (oil-in-water or direct miniemulsion). The principle of miniemulsion, however, can also be extended to the inverse case, wherein non-polar droplets are dispersed in a polar medium (water-in-oil or inverse miniemulsion).

This technique has previously been used to prepare polyurea, polyurethane or polythiourea nanocapsules with a hydrophilic liquid core which may be stabilized in hydrophilic media (EP 1972651 A1). However, due to the hydrophilic polymer shell of the nanocapsules disclosed therein, these structures cannot be suitably used in hydrophobic, non-polar media. Furthermore, the process according to this document involves loading of nanocapsules with silver nitrate ions which have to be reduced in a further step to obtain nanocapsules loaded with functional catalyst. Lastly, this document does not disclose the application of the obtained nanocapsules for catalysis.

Further, semipermeable microcapsules have been disclosed in US 3,954,666 which comprise an outer semipermeable polymeric skin encapsulating a finely divided heterogeneous catalyst and a ferromagnetic material. These capsules are stable when suspended in an aqueous or non aqueous phase, the catalyst is active for effecting a desired catalytic reaction, and the capsules can be captured and released from the solvent phase by means of a magnetic field. Therefore, these microcapsules are useful as magnetic, heterogeneous catalyst. Other Poly(N-isopropylacrylamide) (PNIPAM) hydrogel microcapsules having a hydrophobic corona have been reported by M. Horecha et al. (Macromolecules 2009, 42, 5811-5817). This hydrogel forms stable dispersions even in highly apolar organic solvents, such as cyclohexane, but flocculate in water. A water-filled hydrogel developed by M. Horecha et al. shows a well-pronounced swelling/deswelling transition triggered by temperature in an environment that contains only minute amounts of water. Encapsulating capabilities of these microcapsules were also demonstrated. These microcapsules can be envisaged for applications that require controlled dispersion and release of hydrophilic species in oils.

Accordingly, it is an object of the present invention to provide a reactor system which allows catalytic reactions with the aid of a water-soluble or water-dispersible or polar solvent-soluble or polar solvent-dispersible catalyst in non-polar environments with high stability, excellent catalytic activity and easy separation and recovery of the catalyst.

Furthermore, a simple, straightforward one-pot process for the production of capsules which allows the encapsulation and stabilization of a water-soluble or water-dispersible, or polar solvent-soluble, or polar solvent-dispersible catalyst in organic environments, is described.

### Summary of the Invention

This object is solved by the aspects of the present invention as specified hereinafter. According to the first aspect of the present invention, a reactor system is provided which comprises:
- capsules having a wall wherein the inner side of the wall is more hydrophilic than the outer side of the wall, wherein the capsule wall comprises hydrophilic inner side which comprises poly(N-isoprpylacrylamide)(PNIPAM);
- a solvent or solvent mixture (S1) outside the capsules;
- a solvent or solvent mixture (S2) inside the capsules which is more hydrophilic than the solvent or solvent mixture (S1); and
- at least one catalyst inside the capsules, wherein the catalyst comprises silver nanoparticles (AgNP) supported on catalyst carrier particles.

In a preferred embodiment, the capsules are stably dispersed in the solvent or solvent mixture (S1).

In another preferred embodiment, the solvent or solvent mixture (S1) is present mainly outside the capsules and/or the solvent mixture (S2) is mainly present inside the capsules.

In another preferred embodiment, the capsules have a size of from 100 to 10000 nm.

In yet another preferred embodiment, the solvent or solvent mixture (S1) comprises at least one organic or ionic liquid.

In another preferred embodiment, the solvent or solvent mixture (S2) is water or an aqueous solution, or an ionic liquid.

In yet another preferred embodiment, the solvent or solvent mixture (S1) is not miscible with the solvent or solvent mixture (S2) to form a homogeneous solution.

In yet another preferred embodiment, the solvent or solvent mixture (S1) is partially miscible with the solvent or solvent mixture (S2) to form a homogeneous solution.

In yet another preferred embodiment, the solvent or solvent mixture (S1) is miscible with the solvent or solvent mixture (S2) to form a homogeneous solution.

In another preferred embodiment, the at least one catalyst inside the capsules is a particulate catalyst, in particular a particulate metal catalyst.

In yet another preferred embodiment, the at least one catalyst inside the capsules is supported on a particulate carrier, in particular supported on a particulate carrier selected from the group consisting of polymer carriers, metal oxide carriers, magnetic carriers, glass carriers or ceramic carriers.

In another preferred embodiment, the at least one catalyst is dispersed or dissolved in the solvent or solvent mixture (S2) inside the capsules or attached to the inner side of the wall of the capsule.

In yet another preferred embodiment, the solvent or solvent mixture (S1) is a mixture of THF and water, preferably in a ratio of from 20:1 to 3:1, more preferably from 12:1 to 7:1.

In another preferred embodiment, the capsules are permeable for the solvent or solvent mixture (S1) and substances soluble therein.

In another preferred embodiment, the capsules are permeable for the solvent or solvent mixture (S2) and substances soluble therein.

In yet another preferred embodiment, the permeability of the capsules for the solvent or solvent mixture (S1) and substances soluble therein and/or for the solvent or solvent mixture (S2) and substances soluble therein is temperature- and/or pH- and/or ionic strength-dependent.

The capsules can be prepared by a process comprising the steps of
- providing a solution (S2') comprising a solvent or solvent mixture (S2); a catalyst which is dissolved or dispersed in said solvent or solvent mixture (S2); and a monomer which is soluble in said solvent or solvent mixture (S2);
- providing a solution (S1') which is not miscible with said solution (S2') comprising a solvent or solvent mixture (S1); and an amphiphilic block copolymer;
- mixing the solution (S1') and the solution (S2') phase; and inducing polymerization of the monomer, wherein the solvent or solvent mixture (S2) is more hydrophilic than the solvent or solvent mixture (S1) and wherein polymerization products of the monomer are more hydrophilic than the solvent or solvent mixture (S1) and less hydrophilic than the solvent or solvent mixture (S2).

The solution (S2') may comprise compounds which are soluble in the solvent or solvent mixture (S2) and/or compounds which are not soluble, but e.g. dispersible, in the solvent or solvent mixture (S2). Also, the solution (S1') may comprise compounds which are soluble in the solvent or solvent mixture (S1) and/or compounds which are not soluble, but e.g. dispersible, in the solvent or solvent mixture (S1). Thus, according to the present invention, the term "the solution (S2')" is to be understood in the sense of "the mixture (S2')", and preferably in the sense of "the liquid mixture (S2')", which may e.g. be a solution, dispersion, or an emulsion.

Also, according to the present invention, the term "the solution (S2')" is to be understood in the sense of "the mixture (S2')", and preferably in the sense of "the liquid mixture (S2')", which may e.g. be a solution, a dispersion, or an emulsion.

It is further disclosed that the process, the solvent or solvent mixture (S1) comprises at least one organic or ionic liquid.

With respect to the process, it is further disclosed that the solvent or solvent mixture (S2) is water or an aqueous solution, or an ionic liquid.

With respect to the process, it is further disclosed that the solubility of the polymerization products of the monomer in water lies between that of the solvent or solvent mixture (S1) and that of the solvent or solvent mixture (S2).

With respect to the process, it is further disclosed that a crosslinking agent and/or an inducible polymerization initiator is present in the solution (S2').

With respect to the process, it is further disclosed that at least one monomer is present in the solution (S2'), optionally a mixture of at least two monomers is present in the solution (S2').

With respect to the process, it is further disclosed that the amphiphilic block copolymer has a HLB value of from 3 to 8, more preferably from 3 to 6, more preferably 3 to 4. The HLB value, or hydrophilic-lipophilic balance, as used herein is the HLB value according to Griffin defined in the publication Griffin, W., "Calculation of HLB Values of Non-Ionic Surfactants", J. Soc. Cosm. Chem. 1954 (vol. 5), pp. 249-256.

With respect to the process, it is further disclosed that the hydrophobic block of the amphiphilic block copolymer comprises one or more unsaturated bonds.

With respect to the process, it is further disclosed that the amphiphilic block copolymer is copolymerized with the monomer.

According to a further aspect of the present invention, the use of the reactor system according to the first aspect of the present invention for catalysis, in particular for catalysis of components added to or present in the solvent or solvent mixture (S1), is provided.

### Description of Figures

Figure 1 shows SEM (a) and TEM (b) images of Ag@SiO₂ particles and (c,d) TEM images of capsules loaded with Ag@SiO₂ taken at different magnifications.
Figure 2 shows UV-Vis absorption spectra of reduction of 4-nitrophenol catalysed by Ag@SiO₂ encapsulated inside the capsules. [4-nitrophenol] = 0.1 mM, [NaBH_{4]} = 0.05 M, [Ag] = 0.48.10⁻³ mg/ml. Successive spectra were taken with time interval of 1 min.
Figure 3 shows plots of c/c₀ (a, c) and In(c/c₀) (b, d) versus time for the borohydride reduction of 4-nitrophenol catalysed by Ag@SiO₂ (a, b) and MC(Ag@SiO₂) (c, d). Rate constants determined from the linear fits of In(c/c₀) (dash lines) and corresponding concentrations of Ag are given in Table 1.
Figure 4 shows the apparent rate constants as function of squared silver concentration and corresponding linear fits (dash lines), determined for freely dispersed (squares) and encapsulated (circles) Ag@SiO₂ nanocatalyst.
Figure 5 shows the temperature dependence of the apparent rate constant and conversion of 4-nitrophenol catalysed with Ag@SiO₂ and MC(Ag@SiO₂). [Ag] = 5.10⁻⁴ mg/ml.

### Detailed Description of the Invention

It has been surprisingly found that encapsulating catalytically active species in polymer capsules having a wall wherein the outer side of the wall is hydrophobic and the inner side of the wall is hydrophilic yields a catalytic system which is stable in hydrophobic media, exhibits increased catalytic activity as compared to freely dispersed catalyst and allows for easy removal of the catalyst from the reaction mixture.

The increased catalytic activity of the capsules as a reactor system according to the present invention and in particular of the catalyst inside the capsules according to the present invention is supposedly due to the following characteristics.

The present invention employs a metal catalyst, which comprises silver nanoparticles (AgNP), supported on catalyst carrier particles, preferably on metal oxide carrier particles, particularly preferably on SiO₂ particles (Ag@SiO₂) as nanocatalyst. SiO₂ particles having magnetic properties may also be employed. The application of supports allows preparing metal nanocatalyst having a surface which is completely free of a stabilizing layer, prevents the particles from undesirable aggregation, ensures high surface-to-volume ratio of the catalyst and thus enhances catalytic activity. Moreover, in contrast to bare nanoparticles (e.g. AgNP), the supported nanoparticles (e.g. Ag@SiO₂) can easily be recovered by centrifugation and further re-used for catalytic purposes.

However, unmodified SiO₂ particles as nanocatalyst supports are poorly dispersible in hydrophobic media. Therefore, a metal catalyst supported on carriers such as SiO₂ particles could not be effectively and stably used in non-polar organic media. By encapsulating the supported catalyst in capsules according to the present invention, it became possible to provide a catalyst which is stable in a hydrophobic environment and thus substantially exceeds the catalytic activity of the same catalyst in a freely dispersed state.

This effect may be caused by a "sponge effect" of the capsules in the hydrophobic environment. The capsules according to the present invention are cross-linked to a certain degree so that they are still permeable for water and water-soluble molecules. For example, if a small amount of more hydrophilic media (such as water or an aqueous solution) is added to the more hydrophobic environment surrounding the capsules, the gradient in hydrophilicity between the inside and the outside of the capsules potentially exerts a driving force on the hydrophilic media and the substances dissolved therein to be absorbed by the capsules.

Due to this, the volume fraction of water inside the capsules significantly exceeds the same outside of the capsules and water-soluble reagents concentrate inside the capsules. Such a local increase of the reagent concentration in the vicinity of the catalyst likely leads to an increase in the reaction rate, resulting also in increased catalytic activity of the catalyst. Thus, the capsules of the present invention act as high-performance reactors in a mixed organic/aqueous system.

Within the disclosure of the present invention, the capsules should be understood to have a core comprising a liquid phase and components dissolved and/or dispersed therein and a wall encapsulating the liquid phase with dissolved or dispersed components.

The capsules of the present invention are characterized by a wall wherein the inner side of the wall is more hydrophilic than the outer side of the wall.

Thus it is possible to encapsulate and stabilize catalytically active species which are more stable if dispersed or dissolved in more hydrophilic (e.g. aqueous) media inside the capsules while the capsules themselves can be stably dispersed in more hydrophobic organic media.

In a preferred embodiment, the capsule wall comprises a more hydrophilic inner side which comprises a hydrophilic polymer, in particular a thermoresponsive, and/or pH-responsive, and/or ionic strength-responsive polymer.

The capsule wall comprises a hydrophilic inner side which comprises poly(N-isopropylacrylamide) (PNIPAM). As a function of temperature the inner side can become more hydrophilic or more hydrophobic.

In another preferred embodiment, the capsule wall comprises a more hydrophobic outer side which comprises a polymer having a hydrophobic block, in particular the polymer which is comprised in the outer side of the capsule wall is an amphiphilic block copolymer. In a particularly preferred embodiment, the capsule outer wall comprises an amphiphilic block copolymer comprising one or more unsaturated bonds, in particular the one or more unsaturated bonds are comprised in the hydrophobic block. In one particularly preferred embodiment, the capsule outer wall comprises a poly(isoprene-*block*-ethylene oxide) block copolymer.

The term "hydrophobic" (i.e. "lipophilic") as used herein refers to a chemical compound or moiety lacking affinity for water, tending to repel or not to absorb water and typically having the ability to interact with fats, oils, lipids, and non-polar solvents or solvents of moderate polarity, such as hexane or toluene.

The term "hydrophilic" as used herein refers to a chemical compound or moiety having affinity for water and ability to readily absorb water or interact with water and other polar solvents and substances, typically through hydrogen bonding.

The term "more hydrophilic" as used herein refers to an increased hydrophilic character of one chemical compound (e.g. a solvent) or mixture of compounds (solvents) in comparison to another chemical compound or mixture of compounds.

According to one embodiment of the present invention, the term "more hydrophilic" is used synonymous with "more soluble", i.e. having a higher solubility in water (expressed in % w/w, in particular at room temperature).

In order to determine the solubility of a chemical compound in water according to the present invention, any method as known in the art may be employed. An example of such a method is performed as follows: a known amount of water - for example, 100g - is put in a container. Then the substance of which the solubility is to be determined is added until, even after vigorous and prolonged stirring (i.e. with a 15 mm stir-bar at 120 rpm for 15 minutes at 20°C), some of that substance does not dissolve in the water.

Such a solution is saturated with the solute once it contains as much dissolved solute as possible at that temperature. In this saturated solution, the amount of dissolved solute corresponds to the solubility of the dissolved substance at the specified temperature in that solvent. In the context of solubility of liquid solvents in water, the amount of the substance exceeding the solubility will form a separate phase to the saturated aqueous solution over time. Examples for the solubility of various solvents in water (expressed in % (w/w)) are given in Table 1.

**Table 1 Solubility of various solvents in water**

| **Solvent** | **Solubility in Water %, (w/w)** | **Solvent** | **Solubility in Water %, (w/w)** |
|---|---|---|---|
| 2,2,4-trimethylpentane | 0.0002 | Diethyl Ether | 6.89 |
| Heptane | 0.0003 | Butyl Acetate | 7.81 |
| Hexane | 0.001 | Ethyl Acetate | 8.7 |
| Pentane | 0.004 | 2-Butanone | 24 |
| Cyclohexane | 0.01 | Isopropanol | 100 |
| Xylene | 0.018 | Tetrahyd rofu ran | 100 |
| Toluene | 0.051 | n-Propanol | 100 |
| Carbon Tetrachloride | 0.08 | Dioxane | 100 |
| Trichloroethylene | 0.11 | Acetone | 100 |
| Benzene | 0.18 | Methanol | 100 |
| Diisopropyl Ether | 0.2 | Ethanol | 100 |
| n-Butanol | 0.43 | Acetonitrile | 100 |
| 1,2-Dichloroethane | 0.81 | Acetic Acid | 100 |
| Chloroform | 0.815 | Dimethylformamide | 100 |
| Dichloromethane | 1.6 | Dimethyl Sulfoxide | 100 |
| Methyl-t-Butyl Ether | 4.8 | Water | 100 |

According to the present invention, the solvents having a solubility in water of 100% (w/w) are completely miscible with water and solvents having a solubility of less than 100% (w/w) are partially miscible or not miscible with water.

In a preferred embodiment, the solvent or solvent mixture (S1) comprises an organic solvent, such as trimethylpentane, ethanol, tetrahydrofurane (THF), pentane, hexane, cyclohexane, benzene, toluene, or any other organic solvents known in the art, or supercritical CO₂. In another preferred embodiment, the solvent or solvent mixture (S1) is a mixture of THF and water, preferably in a ratio of from 20:1 to 3:1, more preferably from 12:1 to 7:1.

The solvent or solvent mixture (S2) comprised in the reactor system according to the present invention preferably has a solubility in water which is higher than the solubility in water of the solvent or solvent mixture (S1).

According to a preferred embodiment, the solvent or solvent mixture (S2) has a solubility in water of more than 0.001% (w/w), more preferably of more than 0.01% (w/w), even more preferably of more than 0.1% (w/w), even more preferably of more than 1% (w/w), even more preferably of more than 10% (w/w), even more preferably of 100% (w/w).

According to another preferred embodiment, the solvent or solvent mixture (S1) has a solubility in water of less than 30 % (w/w), more preferably of less than 10% (w/w), even more preferably of less than 10% (w/w), even more preferably of less than 5% (w/w), even more preferably of less than 1% (w/w), even more preferably of less than 0.1 % (w/w), even more preferably of less than 0.01% (w/w), even more preferably of less than 0.001% (w/w).

Optionally, the solubility of the solvent or solvent mixture (S2) in water is more than 1% (w/w) higher in absolute terms, more preferably more than 5% (w/w) higher in absolute terms, even more preferably more than 10% (w/w) higher in absolute terms, even more preferably more than 20% (w/w) higher in absolute terms, than the solubility of the solvent or solvent mixture (S1) in water.

In a preferred embodiment, the solvent or solvent mixture (S2) is water or aqueous solution, or ionic liquid, more preferably (S2) is water.

In another preferred embodiment, the solvent or solvent mixture (S1) is not miscible with the solvent or solvent mixture (S2) to form a homogeneous solution. By a solvent or solvent mixture (S1) which is not miscible with a solvent or solvent mixture (S2) to form a homogeneous solution, it is meant that the mixture of the two is not homogeneous after mixing at 20°C and settle into separate liquid phases or layers of different composition over time at 20°C, preferably after storing for 3 days at 20°C. Preferably, a homogeneous solution in the context of the present invention means a uniform system which is characterized in that the system as a whole has only one macroscopic phase which has everywhere the same consistency and thus, the same properties.

Accordingly, a solvent or solvent mixture (S1) which is miscible with a solvent or solvent mixture (S2) to form a homogeneous solution defines that the mixture of the two forms a homogeneous solution after mixing at 20°C and do not settle into separate liquid phases or layers of different composition over time at 20°C, preferably after storing for 3 days at 20°C.

In yet another preferred embodiment, the solubility of the solvent or solvent mixture (S2) in the solvent or solvent mixture (S1) is less than 25% (w/w), preferably less than 10% (w/w), more preferably less than 5% (w/w), even more preferably less than 1 % (w/w), even more preferably less than 0.1 % (w/w), even more preferably less than 0.01 % (w/w), even more preferably less than 0.001 % (w/w), even more preferably less than 0.0001 % (w/w).

According to yet another preferred embodiment, the solubility of the solution (S2') in the solution (S1') is less than 25% (w/w), preferably less than 10% (w/w), more preferably less than 5% (w/w), even more preferably less than 1 % (w/w), even more preferably less than 0.1 % (w/w), even more preferably less than 0.01 % (w/w), even more preferably less than 0.001 % (w/w), even more preferably less than 0.0001 % (w/w).

Preferably, the solvent or solvent mixture (S1) is present mainly outside the capsules and/or the solvent mixture (S2) is mainly present inside the capsules.

In a preferred embodiment, the solvent or solvent mixture (S1) accounts for more than 50% (w/w), in a more preferred embodiment more than 60% (w/w), in a more preferred embodiment more than 70% (w/w), in a more preferred embodiment more than 80% (w/w), in a more preferred embodiment more than 90% (w/w), in a more preferred embodiment more than 95% (w/w) of the total weight of the solvents (S1 and S2) of the reactor system present outside the capsules.

In another preferred embodiment, the solvent or solvent mixture (S2) accounts for more than 50% (w/w), in a more preferred embodiment more than 60% (w/w), in a more preferred embodiment more than 70% (w/w), in a more preferred embodiment more than 80% (w/w), in a more preferred embodiment more than 90% (w/w), in a more preferred embodiment more than 95% (w/w) of the total weight of the solvents (S1 and S2) of the reactor system present inside the capsules.

In another preferred embodiment, it is preferred that more than 50% (w/w), more preferred more than 60% (w/w), more preferred more than 70% (w/w), more preferred more than 80% (w/w), more preferred more than 90% (w/w), more preferred more than 95% (w/w), of the total weight of the solvent or solvent mixture (S1) of the reactor system according to the present invention is present outside the capsules.

In another preferred embodiment, it is preferred that more than 50% (w/w), more preferred more than 60% (w/w), more preferred more than 70% (w/w), more preferred more than 80% (w/w), more preferred more than 90% (w/w), more preferred more than 95% (w/w), of the total weight of the solvent or solvent mixture (S2) of the reactor system according to the present invention is present inside the capsules.

Herein, the capsules are understood to be stably dispersed in the solvent or solvent mixture (S1) if they do not settle upon standing and do not coagulate or flocculate upon standing. In particular, the capsules are stably dispersed or dissolved if less than 2% (w/w) of the capsules present in the reaction system settle after standing for 24 hours at 20°C, more preferably less than 0.5% (w/w) after 24 hours at 20°C.

In a preferred embodiment, the capsules according to the present invention have a size of from 100 to 10000 nm, in particular of from 500 to 5000 nm, more preferably of from 1000 to 2000 nm. Depending on the size of the obtained capsules, the capsules may be referred to as nanocapsules, microcapsules or nano-/microcapsules.

The at least one catalyst inside the capsules may be any type of catalyst known in the art, such as metallic catalysts, organometallic catalysts and organocatalysts, e.g. enzymes.

The at least one catalyst inside the capsules is a particulate catalyst, in particular a particulate metal catalyst. The particulate metal catalyst comprises silver.

In another preferred embodiment, mixed catalytic systems can be used, e.g. a combination of a metal catalyst and an organometalic catalyst, or a combination of a metal catalyst and an organocatalyst.

In another preferred embodiment, the at least one catalyst inside the capsules is supported on a particulate carrier, in particular supported on a particulate carrier selected from the group consisting of polymer carriers, metal oxide carriers, magnetic carriers, glass carriers or ceramic carriers. Preferably, these carriers can be stably dispersed or dissolved in the solvent or solvent mixture (S2). More preferably, the at least one catalyst is dispersed or dissolved in the solvent or solvent mixture (S2) inside the capsules or attached to the inner side of the wall of the capsule.

In a particularly preferred embodiment, the catalyst is silver nanocatalyst supported on a SiO₂ carrier.

In a preferred embodiment of the present invention, the capsules are permeable for the solvent or solvent mixture (S2) and substances soluble therein. In a particularly preferred embodiment, the capsules are permeable for the solvent or solvent mixture (S2) and substances soluble therein as long as the solvent or the substances soluble therein do not exceed a molar mass of 5000, more preferably of 1000, even more preferably of 200.

In another preferred embodiment of the present invention, the permeability of the capsules for the solvent or solvent mixture (S2) and substances soluble therein is temperature-dependent.

Poly(N-isopropylacrylamide) (PNIPAM) hydrogels undergo a sharp volume transition near the lower critical solution temperature (LCST) from a highly hydrated swollen state below LCST to a dehydrated collapsed state above the LCST. This effect can be exploited in the capsules according to the present invention in which the shell permeability may be modulated by temperature. Accordingly, if the temperature is increased over the LCST of the respective thermoresponsive polymer shell, the shell should become less penetrable for the reactants. In the case of PNIPAM in aqueous solutions, the LCST is about 32 °C. The solubility and hydrophilicity of PNIPAM can be also changed by pH or ionic strength. The LCST can be further tuned by means of co-polymerisation of different monomers. The LCST for other compounds are known in the art or may be determined by a person skilled in the art.

The capsules according to the present invention can be produced by the following process.

In one step of the process, a solution (S2') is provided comprising a solvent or solvent mixture (S2), a catalyst which is dissolved or dispersed in said solvent or solvent mixture (S2) and a monomer which is soluble in said solvent or solvent mixture (S2). The solvent or solvent mixture (S2) and the catalyst may be as described above.

However, the solvent or solvent mixture (S2) must be more hydrophilic than the solvent or solvent mixture (S1) described below.

The monomer which is soluble in the solvent or solvent mixture (S2) must further be selected so that the polymerization products of this monomer are more hydrophilic than the solvent or solvent mixture (S1) and less hydrophilic than the solvent or solvent mixture (S2). If the monomer is selected accordingly, the polymerization products of this monomer or monomer mixture will be localized at the phase boundary between solvent or solvent mixture (S1) and solvent or solvent mixture (S2) and form a polymeric capsule around a core consisting of solvent or solvent mixture (S2). Herein, a monomer may relate to a single type of monomer or a mixture of different monomers.

With respect to the process, the term monomer relates to a single type of monomer.

With respect to the process, the term monomer relates to a mixture of at least two different monomers. Optionally, a mixture of NIPAM with 4-vinylpyridine may be used as the monomer. Further optionally, a mixture of NIPAM with acrylic acid may be used as the monomer. Even further optionally, a mixture of NIPAM with acrylamide may be used as the monomer.

With respect to the process, it is further disclosed that the solution (S2') further comprises a crosslinking agent and/or an inducible polymerization initiator. In a further preferred embodiment, methylenebisacrylamide (MBA), piperazine diacrylate (PDA), N,N'-bisacrylylcystamine (BAC), and N,N'-diallyltartardiamide (DATD) are used as crosslinking agents, in particular MBA is used. I It is further disclosed that the inducible polymerization initiator is a chemically inducible, heat-inducible or light-inducible polymerization initiator, in particular a heat-inducible polymerization initiator, such as ammonium persulfate (APS).

In another step of the process a solution (S1') which is not miscible with said solution (S2') is provided comprising a solvent or solvent mixture (S1) and an amphiphilic block copolymer which is soluble in said solvent or solvent mixture (S1). The solvent or solvent mixture (S1) and the amphiphilic block copolymer in the process may be as described above.

After providing the solutions (S1') and (S2'), the solutions (S1') and (S2') are mixed. After the mixing step, the solutions should preferably form an emulsion wherein droplets of the solution (S2') in solution (S1') have a size comparable to the desired capsules to be formed. The solutions may be mixed by a screw mixer, high-shear mixer, disperser or other mixing equipment suitable for the mixing step. One example for the mixing step is mixing in an Ultra-Turax mixer (IKA Laboratory Equipment, Staufen, Germany) at 13500 rpm for 2 minutes.

The solutions (S1') and (S2') are preferably provided in separate vessels before they are mixed together.

After the mixing step, the polymerization of the monomer is induced in the mixed solutions (S1') and (S2'). The step of inducing the polymerization of the monomer is performed according to the type of the polymerization initiator which is used. Polymerization is induced by heating of the mixed solutions, in particular by heating to 80°C after the mixing step and incubation at 80°C for 1 hour.

By the induction of polymerization after thorough mixing of the solutions (S1') and (S2'), copolymerization of the monomer with the amphiphilic block copolymer will occur. In this way, the amphiphilic block copolymer does not only serve as a surfactant but also as a shell-forming component and thus increases the stability of the capsules in the hydrophobic, non-polar and/or organic media further.

This invention further provides the use of the capsules obtainable by this process according to the present invention as well as the capsules further specified herein as a carrier for catalysts.

Additionally, this invention provides the use of the capsules obtainable this process as well as the capsules further specified herein in the reactor system according to the present invention.

Furthermore, this invention provides the use of the reactor system according to the present invention for catalysis, in particular for catalysis of the components added to or present in the solvent or solvent mixture (S1).

According to a preferred embodiment, the use of the reactor system according to the present invention is disclosed for catalysis of substances which have a higher solubility in S1 than in S2.

### Examples

### Example 1

### Synthesis of Ag@SiO₂ nanocatalyst

Silica (SiO₂) particles (dₐᵥ = 219 nm, PDI=0.012 as determined by Dynamic light scattering (DLS); DLS measurements were performed with Zetasizer Nano S, (He-Ne-laser 4 mW, 632.8 nm, back scattering, NIBS Technology, Malvern Instruments) were prepared according to the method as published in W. Stöber et al., J Colloid Interface Sci., 1968, 26, 62, by addition of 1 ml of aqueous solution of ammonium hydroxide (NH₄OH, 28% solution; Acros Organics, Geel, Belgium), 1 ml of tetraethyl orthosilicate (TEOS; Sigma-Aldrich, St. Louis, USA) and 0.1 ml of water to 15 ml of ethanol (analytical grade; Acros Organics, Geel, Belgium). The reaction mixture was stirred at room temperature for 4 hours. Afterwards particles were separated by centrifugation, washed with ethanol and water and finally dried in a vacuum oven at 50 °C overnight to receive SiO₂ in dry (powder) state for use as supports for silver nanocatalyst.

The size of silica particles was optimized by varying the ratio of TEOS, H₂O and NH₄OH in order to make them easy to handle and, in the same time, small enough to be encapsulated into the interior of the capsules.

Silica-supported silver nanoparticles (Ag@SiO₂) were prepared by borohydride (NaBH₄, 96% solution; Sigma-Aldrich, St. Louis, USA) reduction of silver acetate (CH₃COOAg, 99%; Sigma-Aldrich, St. Louis, USA) in the presence of SiO₂ particles. To 1.7 mg of SiO₂ powder dispersed in 10 ml of tetrahydrofurane (THF, analytical grade; Acros Organics, Geel, Belgium) 0.25 ml of 6 mM aqueous solution of silver acetate was added and the mixture was stirred at room temperature for 12 hours. Next, 1 ml of 0.01% THF solution of NaBH₄ was added and the reaction mixture immediately turned to dark brown, indicating the formation of silver nanoparticles (AgNP). Ag@SiO₂ particles were recovered from the butch solution and purified by repeated centrifugation and re-dispersion in water.

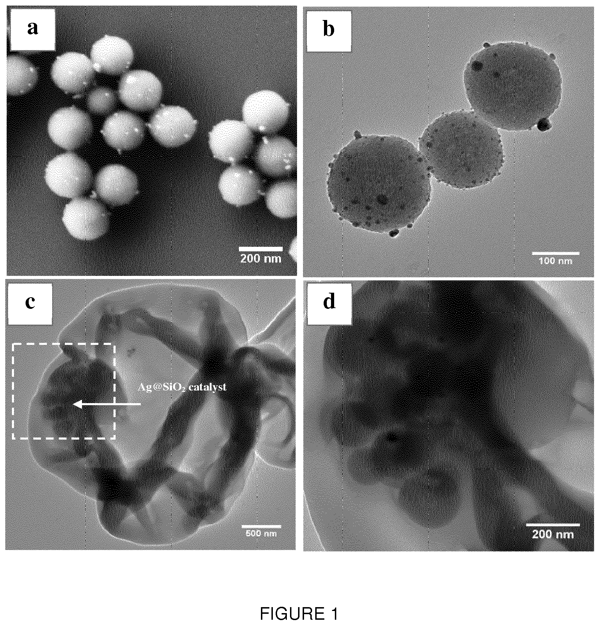

The presence of AgNP on the SiO₂ surface was proved by SEM and TEM imaging (Fig. 1a, b). Scanning electron microscopy (SEM) was performed using Ultra 55 (Carl Zeiss SMT, Jena, Germany) operated at 3 kV in the secondary electron (SE) mode. Transmission electron microscopy (TEM) images were recorded with Libra 200 (Carl Zeiss SMT) operated at 200 kV.

The reaction was carried out in THF/water mixture where the minor amount of water (ca. 1.5 vol %) was used to solubilise silver acetate. Above-mentioned conditions allow to generate silver nanoparticles predominantly attached to the silica surface. The size of the silica-supported AgNP was 19.3±3.8 nm as determined from the analysis of TEM images, whereas the calculated Ag:SiO₂ ratio and the surface coverage of SiO₂ with silver were found to be 1:15 (w/w) and 7.3% (w/w), respectively. Prepared in such a way AgNP appear firmly attached to the SiO₂ surface and cannot be leached out neither by repeated washing with water or ethanol nor by intense agitation in ultrasonic bath (up to 60 min agitation).

In contrast, attempts to prepare Ag@SiO₂ particles in solely THF or aqueous environment were less successful and led to the formation of significant amount of crude silver particulates of over micrometer size, lowering thus the fraction of AgNP attached to the silica supports.

### Example 2

### Encapsulation of Ag@SiO₂ into capsules

The Ag@SiO₂ composite nanoparticles were encapsulated into polymeric capsules by adopting the method of water-in-oil suspension polymerisation of N-isopropylacrylamide (NIPAM, 97.0 %; Acros Organics, Geel, Belgium) in the presence of a block copolymer surfactant as disclosed in M. Horecha et al., Macromolecules, 2009, 42, 5811.

The block copolymer poly(isoprene-*block*-ethylene oxide) (PI-*b*-PEO, Mₙ(PI) = 24300 g/mol, Mₙ(PEO) = 5830 g/mol, PDI(PI-*b*-PEO) = 1.3) was synthesized according to the previously published protocol (cf. M. Horecha et al., Macromolecules, 2009, 42, 5811).

Shortly, 0.15 g of PI-*b*-PEO was mixed with in 3 mL of trimethylpentane (TMP, 99.5%; Sigma-Aldrich, St. Louis, USA) to form the continuous oil phase. Separately, 0.15 g of monomer NIPAM, 0.01 g (5 mol %) of cross-linker N,N-methylenebis(acrylamide) (MBA, 98.0%; Merck, Darmstadt, Germany) and 0.006 g (1 mol %) of initiator ammonium persulfate (APS, 98.0%; Merck, Darmstadt, Germany) were mixed with 0.5 mL of aqueous dispersion of Ag@SiO₂ (3.8 mg/ml) to form a water phase (droplet-forming phase).

Water and oil phases were mixed in Ultra-Turax mixer (IKA, Staufen, Germany) at 13500 rpm for 2 minutes. After this emulsification step, the hydrophilic Ag@SiO₂ particles appeared trapped within the interior of water droplets containing also dissolved monomer, cross-linker and initiator, being stabilized with BCP surfactant. The resulting emulsion was transferred into the glass tube equipped with magnetic stirrer. Temperature of the mixture was rapidly risen to 80°C and the polymerization was carried out for 1 hour. The excess of the surfactant was washed out by 5 times repeated centrifugation and re-dispersion in pure TMP.

The success of Ag@SiO₂ encapsulation was proved using TEM imaging (Fig. 1c,d). From TGA measurements the amount of encapsulated Ag@SiO₂ particles inside the MC was found to be ca. 15% (w/w), which gives an estimated content of silver nanocatalyst in order of 1% (w/w). TGA experiments were carried out in nitrogen atmosphere using TA Q5000 thermal analyzer (TA Instruments, USA) at heating rate of 10 K/min.

Finally capsules were dispersed in THF and used for further experiments.

### Example 3

### Catalytic reduction of 4-nitrophenol

Catalytic activity of encapsulated Ag@SiO₂ was studied and compared with the activity of Ag@SiO₂ freely dispersed in reaction medium. As a model reaction for this study, the catalytically induced reduction of 4-nitrophenol was used.

This reaction was chosen due to the instrumental simplicity of its examination. Using UV-Vis spectroscopy it is possible to examine the reaction kinetics by monitoring the intensity of 4-nitrophenol absorbance peak (λₘₐₓ = 400 nm) with reaction time. However, the specific character of the investigated system required adjustment of particular experimental conditions. As it was already mentioned, due to the presence of hydrophobic shell on the capsules they form a stable dispersion in organic solvents of low and moderate polarity but aggregate in aqueous environment.

On the other hand, in pure aprotic solvents like THF, 4-nitrophenol does not possess any absorption peak in UV-Vis region due to the absence of nitrophenolate ions. To overcome this discrepancy the mixture of THF and water (9:1 v/v) was chosen as the reaction medium to monitor the catalytic processes. In such conditions both Ag@SiO₂ and capsules form sufficiently stable dispersions and well pronounced absorbance peak of 4-nitrophenol is observed.

The kinetics of catalytic reduction of 4-nitrophenol was monitored with UV-Vis spectroscopy. In typical experiment a freshly prepared aqueous solution of sodium borohydride (1.5 M, 0.1 mL) was added to a THF/water (9:1 v/v) solution of 4-nitrophenol (0.1 mM, 3.0 mL, 99%; Sigma-Aldrich, St. Louis, USA). Next, a certain amount of silver-containing catalyst was added to this solution. UV spectra of the mixture were recorded immediately after the addition of the catalyst every 1 minute in the wavelength range 250-500 nm. The evaluation of the reaction kinetics was performed by monitoring the change in intensity of the absorbance peak at 400 nm with time. To eliminate the contribution to the absorbance originated from the presence of silver nanoparticles, the catalyst dispersion with the same concentration of silver was used as a reference in each particular UV-Vis experiment.

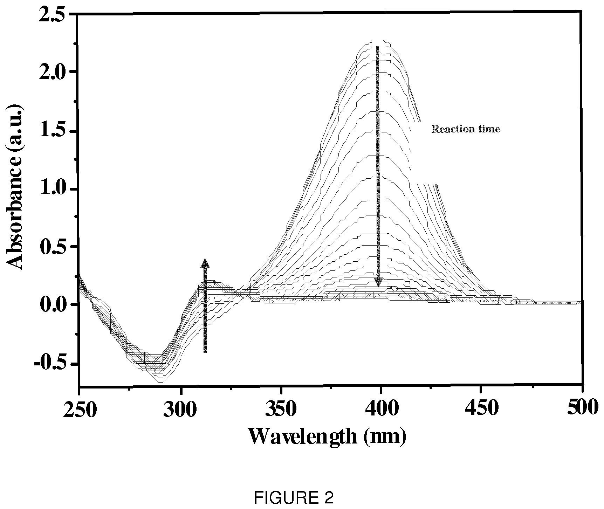

Fig. 2 displays the alteration of the UV-Vis spectra of 4-nitrophenol with time during its catalytic reduction carried out in presence of MC(Ag@SiO₂). As it was expected, after addition of NaBH₄ the intensity of nitrophenolate peak gradually decreased with reaction time (right arrow in Fig. 2), whereas the peak at 315 nm, attributed to the formation of aminophenol, increased as the reaction proceeded (left arrow in Fig. 2).

Similar behaviour was also observed when freely dispersed Ag@SiO₂ particles were used to catalyze the same reaction (data not shown). Such similarities provide clear evidence that Ag@SiO₂ particles retain the catalytic activity after their confinement into the capsules interior and, thus, can be used for catalytic purposes.

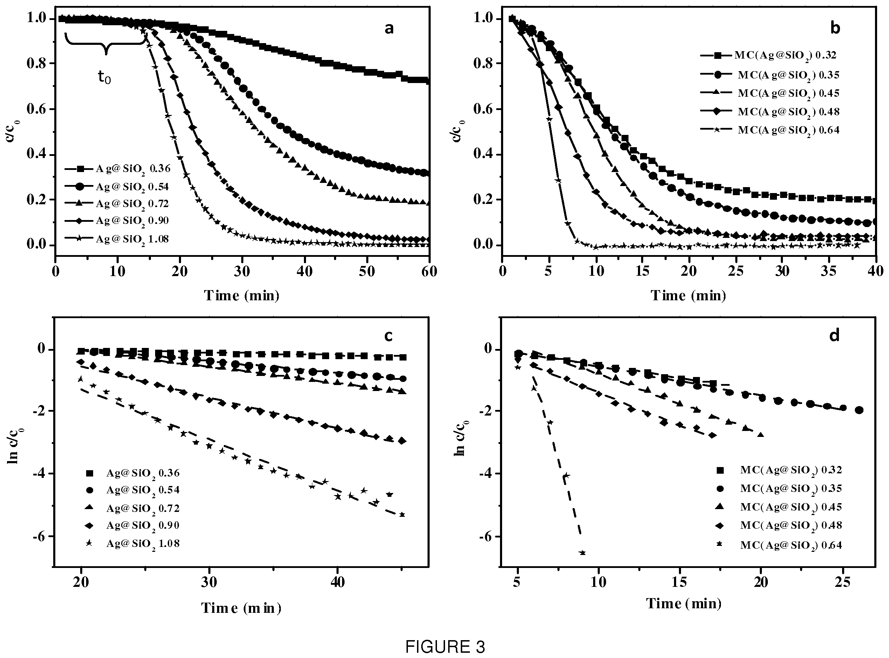

The degree of 4-nitrophenol conversion (c/c₀) was directly excerpted from the UV-Vis spectra by measuring the decrease of the peak intensity at 400 nm with time. Fig. 3a shows the depletion of 4-nitrophenol relative concentration versus time determined for different concentrations of Ag@SiO₂ catalyst freely dispersed in the reaction medium. At the concentrations of silver above 0.9·10⁻³ mg/ml the full conversion of 4-nitrophenol (more than 99%) was usually accomplished in 60 min. As the common feature for all curves, the initiation period (*t₀*) was observed as a plateau at the initial stages of the reaction (Fig. 3a).

After the initiation period the reaction proceeds much faster and can be treated as pseudo first-order process (Fig. 3b). The values of the reaction apparent rate constants determined from the linear fit of In(c/c₀) for different concentration of Ag@SiO₂ nanocatalyst are summarized in Table 2.

**Table 2 Apparent rate constants of catalytic reduction of 4-nitrophenol^{a}**

| **Catalyst** | **[Ag@SiO₂], mg/ml** | **[Ag]·10³, mg/ml** | **k·10²,*^{b}* min⁻¹** |
|---|---|---|---|
| Ag@SiO₂ 0.36 | 0.018 | 0.36 | 0.82 |
| Ag@SiO₂ 0.54 | 0.027 | 0.54 | 3.82 |
| Ag@SiO₂ 0.72 | 0.036 | 0.72 | 5.30 |
| Ag@SiO₂ 0.90 | 0.045 | 0.90 | 10.08 |
| Ag@SiO₂ 1.08 | 0.054 | 1.08 | 16.37 |
| MC(Ag@SiO₂)0.32 | 0.016 | 0.32 | 8.11 |
| MC(Ag@SiO₂)0.35 | 0.018 | 0.35 | 9.40 |
| MC(Ag@SiO₂)0.45 | 0.022 | 0.45 | 18.92 |
| MC(Ag@SiO₂)0.48 | 0.024 | 0.48 | 20.89 |
| MC(Ag@SiO₂)0.64 | 0.032 | 0.64 | 36.12 |
| *^{a}* all catalytic reactions were performed in THF/water 9:1 v/v; | | | |
| *^{b}* k - apparent reaction rate constants determined from the lineal fit of In(c/c₀) incidence with time | | | |

Unforeseen to some extent results were obtained when encapsulated Ag@SiO₂ particles were used as catalyst for the same reaction. First, the activation time substantially decreased and did not exceed 1-2 minutes as compared to 10-15 minutes for freely dispersed Ag@SiO₂ catalyst. At higher concentration of encapsulated catalyst the activation time was not detected at all and substantial decrease of 4-nitrophenol concentration was already observed starting from the first minute of measurement (Fig. 3c).

Secondly, unexpectedly high reaction rates were observed for encapsulated Ag@SiO₂ catalyst (Table 2). At concentrations of Ag in capsules above 0.5-10⁻³ mg/ml 99% conversion of 4-nitrophenol was achieved already in 10 minutes after addition of catalyst. Nevertheless, the reaction catalysed with MC(Ag@SiO₂) can also be treated as a pseudo-first order process within the catalyst concentration range studied (Fig. 3d).

For comparable concentrations of silver, the *k* values determined for the reaction catalysed with MC(Ag@SiO₂) exceeded 5-10 times of magnitude the corresponding rate constants for catalysis with freely-dispersed Ag@SiO₂. Monitoring of the reaction kinetics at Ag concentration higher than 0.64-10⁻³ mg/ml was hardly possible due to the very fast reaction performance and limitations of detection method. Such significant increase of the apparent rate constant in case of application of MC(Ag@SiO₂) is discussed in terms of possible processes occurring during the performed catalytic reaction.

It is well known, that the degree of swelling of PNIPAM-based polymers in water excels their swelling in THF or other organic solvents. On the other hand, the solubility of PNIPAM in certain solvent mixtures can significantly exceed its solubility in pure solvent (the cononsolvency effect).

For example, such enhanced swellability of PNIPAM capsules in THF/water mixture compared to pure THT was previously demonstrated. Since the water volume fraction used in this study is less as the THF/water cononsolvent ratio for PNIPAM, the capsules act as a kind of sponge and selectively absorb water into their interior. Thus, the volume fraction of water inside the capsules significantly exceeds the same in surroundings.

Due to this fact, sodium borohydride, whose solubility in water at 20° C is almost 400 times higher than in THF, will also concentrate inside the capsules. Since the reaction performance depends on the concentration of reagents, the local growth of the reactants concentration in the vicinity of catalyst will lead to the consequent increase of the reaction rate.

It was also found that catalytic reduction of 4-nitrophenol in pure water proceeds more than two magnitude faster than in THF, that additionally proves our suggestions concerning the reasons of acceleration of the catalysis in capsules.

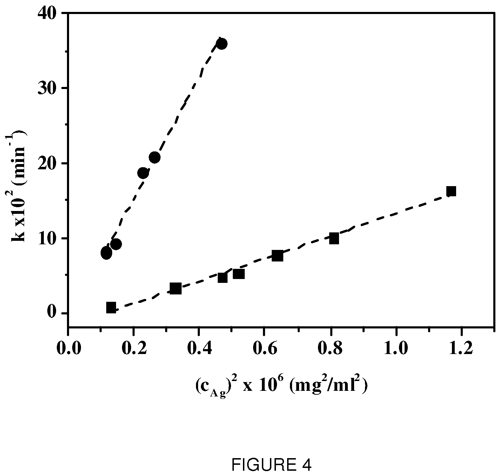

To ascertain possible mechanism of the reaction, the apparent rate constants were plotted as a function of squared concentration of silver nanocatalyst (Fig. 4). For both freely dispersed and encapsulated Ag@SiO₂ particles the rate constants were found to be linearly dependant on squared silver concentration, which, in turn, can be considered as a measure of the surface area of the catalyst. This finding is in agreement with statements of the Langmuir-Hinshelwood mechanism proposed as a model to interpret this reaction (S. Wunder et al., J. Phys. Chem. C, 2010, 114, 8814).

According to this model, borohydride reduction of 4-nitrophenol occurs on the surface of the catalyst in two steps. First, borohydride ions react with the surface of the metal catalyst to form surface-hydrogen species. Such species further reduce 4-nitrophenol molecules concurrently adsorbed on the catalyst surface. Since the surface-induced reduction is the rate-determining step, the apparent rate constant should be proportional to the entire surface area of the catalyst accessible for the reactants. From Fig. 4 it is obvious that catalysis with either freely-dispersed or encapsulated Ag@SiO₂ nanocatalyst perfectly fits to this theory in the whole range of catalyst concentration studied.

Considering all aforementioned it is suggested that PNIPAM-based capsules act not only as hosts for nanocatalyst incorporation, but also serve as microreactors for catalysis. First of all, slight cross-linking of capsule walls does not prevent their permeability for water and water soluble molecules. Second, in THF/water environment hydrophilic nature of PNIPAM causes concentration of water and water soluble reactants in its vicinity. Finally, the presence of Ag nanocatalyst inside the capsules in immediate proximity to the concentrated reactants stimulates the reaction to perform much faster as compared to the catalyst being freely-dispersed in reaction mixture.

### Example 4

### Temperature dependence of catalytic activity

The use of the PNIPAM polymer induced us to suppose that the thermoresponsive effect of PNIPAM will retranslate onto the behaviour of produced capsules. It was suggested that with an increase of the reaction temperature above LCST of PNIPAM, the capsules should become less penetrable for the reactants and, thus, the total rate of catalysis should be reduced or even completely suppressed.

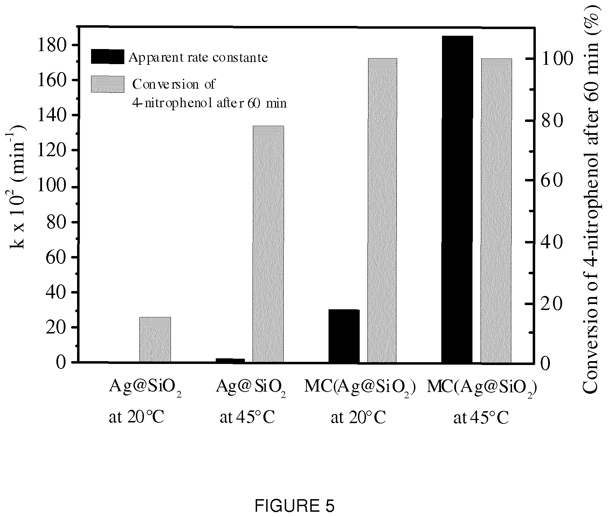

In fact, no suppression of the catalysis was observed in the investigated reaction conditions. Moreover, the catalytic reaction proceeded faster and was accomplished in first several minutes. A similar outcome, i.e. acceleration of the reaction rate with temperature was observed in case of freely-dispersed Ag@SiO₂ nanocatalyst (Fig. 5). Although the relative increase of the reaction rate constant for freely-dispersed Ag@SiO₂ nanocatalyst as compared to MC(Ag@SiO₂) was found to be more pronounced (9 times compare to 6 times), it is rather difficult to speculate about the thermo-control of such reaction. Obviously, thermo-induced collapse of the capsules shall hinder to some extent the diffusion of the reagents to the catalyst but it still does not prevent the reaction as a whole. This becomes more evident taking into account that adsorption constants of 4-nitrophenol and NaBH₄ are temperature dependent and do also increase with an increase of temperature. Since the reduction of adsorbed 4-nitrophenol represents the rate-determining step, an increase of the adsorption constant with temperature leads to the corresponding increase of the reaction rate constant.

## Claims

1. A reactor system comprising:
a) capsules having a wall wherein the inner side of the wall is more hydrophilic than the outer side of the wall,
wherein the capsule wall comprises a hydrophilic inner side which comprises poly(N-isopropylacrylamide) (PNIPAM);
b) a solvent or solvent mixture (S1) outside the capsules;
c) a solvent or solvent mixture (S2) inside the capsules which is more hydrophilic than the solvent or solvent mixture (S1); and
d) at least one catalyst inside the capsules, wherein the catalyst comprises silver nanoparticles (AgNP) supported on catalyst carrier particles.

2. The reactor system according to claim 1, wherein the capsules are stably dispersed in the solvent or solvent mixture (S1).

3. The reactor system according to claim 1 or 2, wherein the solvent or solvent mixture (S1) is present mainly outside the capsules and/or the solvent mixture (S2) is mainly present inside the capsules.

4. The reactor system according to any of claims 1 to 3, wherein the solvent or solvent mixture (S1) comprises at least one organic or ionic liquid and/or wherein the solvent or solvent mixture (S2) is water or an aqueous solution or an ionic liquid.

5. The reactor system according to any of claims 1 to 4, wherein the at least one catalyst inside the capsules is supported on a particulate carrier selected from the group consisting of polymer carriers, metal oxide carriers, magnetic carriers, glass carriers or ceramic carriers.

6. The reactor system according to any of claims 1 to 5, wherein the at least one catalyst is dispersed or dissolved in the solvent or solvent mixture (S2) inside the capsules or attached to the inner side of the wall of the capsule.

7. The reactor system according to any of claims 1 to 6, wherein the solvent or solvent mixture (S1) is a mixture of THF and water, preferably in a ratio of from 20:1 to 3:1, more preferably from 12:1 to 7:1.

8. The reactor system according to any of claims 1 to 7, wherein the capsules are permeable for the solvent or solvent mixture (S1) and substances soluble therein and/or wherein the capsules are permeable for the solvent or solvent mixture (S2) and substances soluble therein.

9. Use of the reactor system according to any of claims 1 to 8 for catalysis, in particular for catalysis of components added to or present in the solvent or solvent mixture (S1).

## Patentansprüche

1. Reaktorsystem, umfassend:
a) Kapseln mit einer Wand, wobei die Innenseite der Wand hydrophiler als die Außenseite der Wand ist,
wobei die Kapselwand eine hydrophile Innenseite umfasst, die Poly(N-isopropylacrylamid) (PNIPAM) umfasst;
b) ein Lösungsmittel oder Lösungsmittelgemisch (S1) außerhalb der Kapseln;
c) ein Lösungsmittel oder Lösungsmittelgemisch (S2) innerhalb der Kapseln, das hydrophiler als das Lösungsmittel oder Lösungsmittelgemisch (S1) ist; und
d) mindestens einen Katalysator innerhalb der Kapseln, wobei der Katalysator Silber-Nanoteilchen (AgNP), getragen auf Katalysator-Trägerteilchen, umfasst.

2. Reaktorsystem gemäß Anspruch 1, wobei die Kapseln in dem Lösungsmittel oder Lösungsmittelgemisch (S1) stabil dispergiert sind.

3. Reaktorsystem gemäß Anspruch 1 oder 2, wobei das Lösungsmittel oder Lösungsmittelgemisch (S1) hauptsächlich außerhalb der Kapseln vorhanden ist und/oder das Lösungsmittelgemisch (S2) hauptsächlich innerhalb der Kapseln vorhanden ist.

4. Reaktorsystem gemäß einem der Ansprüche 1 bis 3, wobei das Lösungsmittel oder Lösungsmittelgemisch (S1) mindestens eine organische oder ionische Flüssigkeit umfasst und/oder wobei das Lösungsmittel oder Lösungsmittelgemisch (S2) Wasser oder eine wässrige Lösung oder eine ionische Flüssigkeit ist.

5. Reaktorsystem gemäß einem der Ansprüche 1 bis 4, wobei der mindestens eine Katalysator innerhalb der Kapseln auf einem teilchenförmigen Träger, ausgewählt aus der Gruppe, die aus Polymerträgern, Metalloxidträgern, magnetischen Trägern, Glasträgern oder keramischen Trägern besteht, getragen wird.

6. Reaktorsystem gemäß einem der Ansprüche 1 bis 5, wobei der mindestens eine Katalysator in dem Lösungsmittel oder Lösungsmittelgemisch (S2) innerhalb der Kapseln dispergiert oder gelöst ist oder an der Innenseite der Wand der Kapsel gebunden ist.

7. Reaktorsystem gemäß einem der Ansprüche 1 bis 6, wobei das Lösungsmittel oder Lösungsmittelgemisch (S1) ein Gemisch von THF und Wasser, bevorzugt in einem Verhältnis von 20:1 bis 3:1, stärker bevorzugt von 12:1 bis 7:1 ist.

8. Reaktorsystem gemäß einem der Ansprüche 1 bis 7, wobei die Kapseln für das Lösungsmittel oder Lösungsmittelgemisch (S1) und darin lösliche Substanzen permeabel sind und/oder wobei die Kapseln für das Lösungsmittel oder Lösungsmittelgemisch (S2) und darin lösliche Substanzen permeabel sind.

9. Verwendung des Reaktorsystems gemäß einem der Ansprüche 1 bis 8 für Katalyse, insbesondere für Katalyse von Komponenten, die gegeben werden zu oder vorhanden sind in dem Lösungsmittel oder Lösungsmittelgemisch (S1).

## Revendications

1. Système de réacteur comprenant :
a) des capsules ayant une paroi où le côté intérieur de la paroi est plus hydrophile que le côté extérieur de la paroi,
où la paroi de capsule comprend un côté intérieur hydrophile qui comprend du poly(N-isopropylacrylamide) (PNIPAM) ;
b) un solvant ou un mélange de solvants (S1) à l'extérieur des capsules ;
c) un solvant ou un mélange de solvants (S2) à l'intérieur des capsules qui est plus hydrophile que le solvant ou le mélange de solvants (S1) ; et
d) au moins un catalyseur à l'intérieur des capsules, où le catalyseur comprend des nanoparticules d'argent (AgNP) supportées sur des particules de support de catalyseur.

2. Système de réacteur selon la revendication 1, dans lequel les capsules sont dispersées de manière stable dans le solvant ou le mélange de solvants (S1).

3. Système de réacteur selon la revendication 1 ou 2, dans lequel le solvant ou le mélange de solvants (S1) est présent principalement à l'extérieur des capsules et/ou le mélange de solvants (S2) est principalement présent à l'intérieur des capsules.

4. Système de réacteur selon l'une des revendications 1 à 3, dans lequel le solvant ou le mélange de solvants (S1) comprend au moins un liquide organique ou ionique et/ou dans lequel le solvant ou le mélange de solvants (S2) est l'eau ou une solution aqueuse ou un liquide ionique.

5. Système de réacteur selon l'une des revendications 1 à 4, dans lequel l'au moins un catalyseur à l'intérieur des capsules est supporté sur un support particulaire choisi dans le groupe constitué de supports polymères, de supports d'oxyde de métal, de supports magnétiques, de supports en verre ou de supports en céramique.

6. Système de réacteur selon l'une des revendications 1 à 5, dans lequel l'au moins un catalyseur est dispersé ou dissous dans le solvant ou le mélange de solvants (S2) à l'intérieur des capsules ou fixé sur le côté intérieur de la paroi de la capsule.

7. Système de réacteur selon l'une des revendications 1 à 6, dans lequel le solvant ou le mélange de solvants (S1) est un mélange de THF et d'eau, de préférence dans un rapport compris entre 20:1 et 3:1, plus préférablement compris entre 12:1 et 7:1.

8. Système de réacteur selon l'une des revendications 1 à 7, dans lequel les capsules sont perméables au solvant ou au mélange de solvants (S1) et à des substances solubles dans ceux-ci et/ou dans lequel les capsules sont perméables au solvant ou au mélange de solvants (S2) et à des substances solubles dans ceux-ci.

9. Utilisation du système de réacteur selon l'une des revendications 1 à 8 pour la catalyse, en particulier pour la catalyse de composants ajoutés au ou présents dans le solvant ou le mélange de solvants (S1).
